# FASCICULE DE BREVET EUROPEEN

(11) **EP 1 504 986 B1**
(45) Date de publication et mention de la délivrance du brevet: **11.11.2009**
(21) Numéro de dépôt: 04360072.5
(22) Date de dépôt: 06.08.2004
(51) Int. Cl.: B62H 5/20, B60R 25/04

(54) **Système pour démarrer un véhicule motorisé**
Starteinrichtung für motoriziertes Fahrzeug
Start up system for motorized vehicle

(30) Priorité: 06.08.2003 FR 0309704
(43) Date de publication de la demande: 09.02.2005
(73) Titulaire: Delphi Technologies, Troyes, Michigan 48007 (US)
(72) Inventeur: Michel, Christophe, 67230 Westhouse (FR); Stricker, Jean-Mathieu, 67610 La Wantzenau (FR); Kayser, Hervé, 67640 Fegersheim (FR); Michel, Johann, 67400 Illkirch-Graffenstaden (FR)
(74) Mandataire: Robert, Vincent

(56) Documents cités:
- EP-A- 1 273 492
- FR-A- 2 752 549
- US-A- 5 124 565
- US-A- 5 583 383
- US-B1- 6 259 168

## Description

La présente invention se rapporte au domaine technique général des véhicules motorisés du type deux roues, bateaux ou autres. Ces véhicules sont en général mis en route à l'aide de clefs mécaniques dont l'actionnement pilote le fonctionnement de différentes unités de commutation électriques ou d'autres systèmes de sécurité plus élaborés tels que des anti-démarrages codés dans la clef.

L'utilisation de clefs mécaniques n'est pas toujours satisfaisante. Une clef mécanique ou sa serrure correspondante peut d'une part être défectueuse et d'autre part ne pas présenter des garanties d'inviolabilité suffisantes, notamment à l'égard de vols ou de dégradations volontaires. Il devient alors impossible d'utiliser le scooter sans procéder à une réparation, qui peut s'avérer coûteuse.

Les systèmes connus ne permettent pas, par ailleurs, de lutter efficacement contre les vols à l'arraché, une fois que les véhicules, scooters ou bateaux sont en cours d'utilisation.

On connaît également, par l'intermédiaire du document DE-4042451, l'utilisation d'un badge émettant un signal codé reconnu ou non par un deux-roues. En cas de non reconnaissance, au bout d'une période déterminée, une coupure générale de l'alimentation électrique se produit. Un tel système, pilotant l'alimentation électrique générale, peut cependant facilement être mis hors d'usage, par une personne initiée au fonctionnement d'un tel deux-roues. Le degré de protection à l'encontre de vols est aussi insuffisant.

Le but de la présente invention vise à obtenir un degré de sécurité important, notamment à l'égard de vols, et modulable en fonction des besoins des fabricants de deux roues motorisées, empêchant toute utilisation du deux roues motorisées en cas d'utilisation par une personne non habilitée, d'une part, et rendant quasi impossible toute manipulation pour désactiver les mesures de sécurité, d'autre part.

Selon l'invention, le procédé de commande pour l'utilisation d'un véhicule motorisé du type deux roues consiste :
(a) à émettre à partir d'une station de base un signal d'activation, par l'intermédiaire d'une liaison sans fil,
(b) à utiliser un badge réceptionnant le signal d'activation et émettant en réponse un signal codé, par l'intermédiaire d'une liaison sans fil,
(c) à réceptionner le signal codé par la station de base,
(d) à comparer dans la station de base le signal codé à un signal codé et stocké dans une mémoire,
(e) à activer au moins une unité fonctionnelle en cas de reconnaissance au moins partielle du signal codé,
(f)à transmettre un signal codé secondaire correspondant au signal codé complété et/ou remis en forme par la station de base vers au moins une unité fonctionnelle,
(g) à comparer le signal codé secondaire à des données nécessaires à la comparaison et à la reconnaissance, stockées dans une mémoire externe ou interne d'un microprocesseur pilotant l'unité fonctionnelle correspondante,
(h) à déverrouiller l'unité fonctionnelle correspondante, en cas de reconnaissance du signal codé secondaire par l'unité fonctionnelle correspondante,
(i) et émettre périodiquement et / ou de façon évènementielle le signal d'activation sous (a) sur requête d'au moins une unité fonctionnelle en passant par la station de base (4) ou directement à l'initiative de la station de base (4).

Selon un exemple de mise en oeuvre, le procédé consiste à inhiber partiellement selon une étape (j) et / ou totalement selon une étape (k), le fonctionnement de l'unité fonctionnelle correspondante.

Selon un exemple de mise en oeuvre, le procédé consiste au préalable à l'étape (a) de scruter en permanence ou périodiquement l'actionnement d'au moins un organe de commande selon une étape (I), et de mettre en oeuvre l'étape (a) après une détection d'actionnement, au bout d'une durée prédéterminée.

Selon un exemple de mise en oeuvre, le procédé consiste à mettre en oeuvre l'étape (a) de façon automatique et périodique.

Selon un exemple de mise en oeuvre, le procédé consiste à transmettre des informations à l'aide d'informations codées entre d'une part au moins un badge et une station de base, et d'autre part entre la station de base et la ou les unités fonctionnelles.

Selon un exemple de mise en oeuvre, le procédé consiste à transmettre les informations à l'aide d'un signal codé entre des unités fonctionnelles.

Selon un exemple de mise en oeuvre, le procédé consiste à décoder partiellement sur la station de base le signal codé provenant d'au moins un badge.

Selon un exemple de mise en ceuvre, le procédé consiste à décoder au moins partiellement au niveau de chaque unité fonctionnelle, le signal codé secondaire provenant de la station de base.

Selon un exemple de mise en oeuvre, le procédé consiste à décoder complètement sur au moins une unité fonctionnelle, le signal codé secondaire provenant de la station de base.

Selon un exemple de mise en oeuvre, le procédé consiste à alimenter électriquement la ou les unités fonctionnelles lors de la première reconnaissance au moins partielle par la station de base du signal codé émis par un badge, consécutivement à une première comparaison.

Selon un exemple de mise en oeuvre, le procédé consiste à interdire le fonctionnement d'au moins une unité fonctionnelle en cas de non-reconnaissance, soit par la station de base du signal codé émis par un badge, soit par l'unité fonctionnelle correspondante du signal codé secondaire provenant de la station de base.

Selon un exemple de mise en oeuvre, le procédé consiste à mettre en oeuvre un décodage d'un niveau différent dans la station de base et dans la ou les unités fonctionnelles.

Selon un exemple de mise en oeuvre, le procédé consiste à dégrader (i) le fonctionnement de la ou des unités fonctionnelles, en cas de non reconnaissance du signal codé secondaire émis par la station de base, consécutivement à une seconde comparaison.

Selon un exemple de mise en oeuvre, le procédé consiste à couper (j) l'alimentation électrique de la ou des unités fonctionnelles, consécutivement à l'étape (i), après un intervalle de temps déterminé.

La présente invention concerne également un dispositif de mise en oeuvre de procédé décrit ci-dessus. Selon l'invention, le dispositif comporte :
- au moins un badge incorporant une pile et susceptible d'émettre un signal codé en réponse à un signal d'activation,
- une station de base émettant le signal d'activation et alimentée électriquement, périodiquement ou en permanence, par une source d'énergie,
- au moins une antenne d'émission connectée électriquement à la station de base, propageant le signal d'activation dans l'air,
- des moyens de décodage au moins partiel du signal codé, incorporés dans la station de base,
- un bus de données reliant la station de base à au moins une unité fonctionnelle de manière à transmettre un signal codé secondaire à la ou aux unités fonctionnelles,
- et des moyens de décodage complémentaires, intégrés dans le ou dans chacune des unités fonctionnelles.

Selon un exemple de réalisation, le dispositif comporte au moins un organe de commande ou bouton destiné à être actionné par l'utilisateur pour l'émission du signal d'activation.

Selon un exemple de réalisation, le dispositif comporte un microprocesseur associé à chaque unité fonctionnelle, le ou les microprocesseurs étant reliés entre eux via le bus de données et réalisant au moins en partie les moyens de décodage complémentaires.

Selon un exemple de réalisation, au moins un microprocesseur est associé à une mémoire externe ou interne stockant les données nécessaires à la reconnaissance du signal codé secondaire.

Selon un exemple de réalisation, le dispositif comporte deux organes de commande, l'un servant au moins au démarrage du véhicule deux-roues motorisé, l'autre servant au déverrouillage d'un organe du type capot ou trappe d'accès.

Selon un exemple de réalisation, en cas de défaillance du badge, le dispositif comprend un connecteur destiné à recevoir un badge et à alimenter électriquement ledit badge.

Selon un autre exemple de réalisation, en cas de défaillance du badge, le dispositif comprend une liaison transpondeur utilisée avec une bobine ré-alimentant le badge par liaison inductive de proximité.

D'autres caractéristiques et avantages ressortiront également de la description détaillée figurant ci-après, à titre d'exemple non limitatif, en référence aux dessins annexés dans lesquels :
- la figure 1 est un exemple schématique de réalisation d'un dispositif conforme à l'invention,
- la figure 2 représente un schéma fonctionnel identifiant les étapes d'un exemple de mise en oeuvre du procédé conforme à l'invention.
- la figure 3 représente un schéma fonctionnel identifiant les étapes d'un autre exemple de mise en oeuvre du procédé conforme à l'invention.

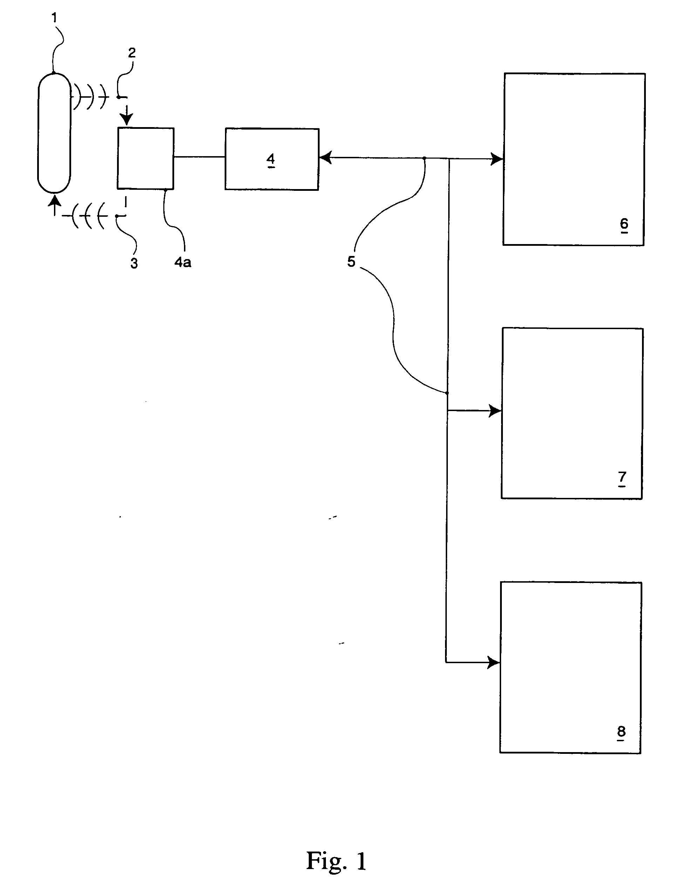

La figure 1 représente schématiquement les éléments d'un exemple de réalisation d'un dispositif de mise en oeuvre d'un procédé de commande pour l'utilisation d'un deux-roues. Un tel dispositif peut également convenir à tout autre véhicule ou bateau.

Le dispositif comporte au moins un badge (1) incorporant une pile et susceptible d'émettre un signal codé (2), en réponse à un signal d'activation (3).

Le signal d'activation (3) est émis par une station de base (4) via au moins une antenne d'émission (4a) à une fréquence de 125 kHz, tandis que le signal codé (2) émis par le badge (1), présente une fréquence de 433,92 MHz. D'autres fréquences peuvent également convenir selon les pays où le dispositif est utilisé. La liaison entre la station de base (4) et le badge (1) est une liaison radiofréquence, connue en tant que telle.

La station de base (4) est alimentée électriquement en permanence ou périodiquement selon une fréquence déterminée.

Le dispositif conforme à l'invention comporte également au moins un organe de commande, destiné à être actionné par l'utilisateur du deux-roues. L'organe de commande (non représenté) est par exemple une manette d'actionnement de freins ou un bouton ou interrupteur spécifique, attribué au démarrage du deux-roues ou à une autre fonction.

Alternativement, le signal d'activation (3) peut aussi être émis de façon périodique et automatique, suivant une fréquence déterminée.

La station de base (4) peut consécutivement à une comparaison (C₁) reconnaître des données numériques contenues dans le signal codé (2), spécifiques au composant électronique utilisé dans le badge (1) et spécifiques à l'application, tel qu'un numéro de constructeur ou un numéro de cible véhicule, ou encore les premiers chiffres d'un numéro de série.

Le dispositif comporte aussi des moyens de décodage, au moins partiel, du signal codé (2), incorporés dans la station de base (4). Les moyens de décodage comprennent par exemple un algorithme de décryptage.

Le dispositif conforme à l'invention comporte un bus de données (5) reliant, par une liaison filaire, la station de base (4) à au moins une unité fonctionnelle (6, 7).

Le bus de données (5) relie également entre elles les unités fonctionnelles (6, 7) et le cas échéant un tableau de bord (8), comme cela est montré à titre d'exemple à la figure 1.

La station de base (4) peut ainsi transmettre un signal codé secondaire, aux unités fonctionnelles (6, 7) et au tableau de bord (8).

Le signal codé secondaire est par exemple le signal codé (2) émis par le badge (1), le cas échéant remis en forme.

À titre d'exemple, si le signal codé (2) envoyé par le badge (1) est de la forme : DATA 1, DATA 2, DATA 3, .............., DATA 60, la station de base (4) mettra alors à disposition sur le bus de données (5) un signal codé secondaire de la forme : DATA BS 1, DATA BS 2, ..........., DATA BS 10, DATA 1, DATA 2, DATA 3, ..........., DATA 60, DATA BS 11, ............, DATA BS 20. La station de base (4) rajoute par exemple ses propres données (DATA) dans la trame du signal codé (2) émis par le badge (1).

Des moyens de décodage complémentaires sont en outre intégrés dans chaque unité fonctionnelle (6, 7), et permettent de décoder le signal codé secondaire transmis par la station de base (4).

Le décodage complémentaire s'effectue dans l'unité fonctionnelle (6,7) correspondante, possédant l'algorithme de décryptage.

Le badge (1) envoie un message composé d'une partie fixe transmise en claire et d'une partie cryptée qui change à chaque communication. La comparaison, dans l'unité fonctionnelle (6,7) du contenu des deux parties permet d'authentifier la communication et donc le badge (1). Une autre façon de reconnaître le badge (1) est de demander à ce dernier de calculer un nombre avec son algorithme de cryptage à partir d'un code aléatoire envoyé par l'unité fonctionnelle. Celle-ci effectue la même opération de son côté et comparera le nombre retourné par le badge (1) avec le nombre calculé par l'unité fonctionnelle (6 ou 7).

La première unité fonctionnelle (6) permet par exemple de piloter l'injection et l'allumage du moteur du deux-roues, et la seconde unité fonctionnelle (7) permet par exemple de piloter un moteur électrique de verrouillage mécanique de la colonne de direction dudit deux-roues.

Le dispositif conforme à l'invention comporte un microprocesseur spécifique associé à chaque unité fonctionnelle (6, 7), et à la station de base (4).

Les microprocesseurs sont reliés entre eux via le bus de données (5) et au moins une unité fonctionnelle (6, 7) réalise le décodage complémentaire. Le microprocesseur de cette unité fonctionnelle (6, 7) est à cet effet associé à une mémoire externe ou interne (M₂) stockant les données utiles au décodage du signal codé secondaire. Après la reconnaissance du signal codé secondaire, l'unité fonctionnelle (6, 7) correspondante informera de l'état de l'authentification du badge (1) sur le bus de données (5), les autres unités fonctionnelles et celles-ci prendront ensuite les mesures adéquates pour leur fonctionnement nominal.

La transmission d'information, via le bus de données (5), se fait ainsi de façon sécurisée. L'absence ou la non-reconnaissance du signal codé (2) ou du signal secondaire, empêche ou interrompt le fonctionnement d'au moins une des unités fonctionnelles (6) ou (7).

Selon un exemple de réalisation, le dispositif comporte deux organes de commande. L'un est attribué au moins au démarrage du véhicule deux-roues motorisé et l'autre est par exemple attribué au verrouillage / déverrouillage d'un organe du type capot ou trappe d'accès.

L'organe de commande attribué au démarrage est par exemple un bouton START / STOP associé par exemple à une manette de commande des freins.

Le dispositif, selon un exemple de réalisation, comprend un connecteur destiné à recevoir le badge (1) et à alimenter électriquement ce dernier. Le connecteur est par exemple localisé sur le tableau de bord (8). On peut alors utiliser le véhicule en cas de défaillance de la pile du badge (1), en attendant la réparation dudit badge (1).

À titre de variante , le dispositif comprend une liaison transpondeur avec une bobine ré-alimentant le badge (1) par une liaison inductive de proximité.

Les éléments constitutifs de cette liaison transpondeur sont d'une part une antenne déjà présente dans le badge (1) pour la réception du signal d'activation (3) et d'autre part l'antenne d'émission (4a), connectée à la station de base (4) par un câble électrique comportant deux fils conducteurs.

On peut ainsi faire fonctionner le dispositif, même en cas de niveau de charge bas ou insuffisant de la pile du badge (1).

Selon un exemple de réalisation, c'est l'actionnement d'un bouton du tableau de bord (8) qui permet d'alimenter la station de base (4) pour engager l'authentification du badge (1) via la station de base (4).

Le tableau de bord (8) est de ce fait alimenté en permanence pour scruter et déceler un éventuel actionnement du bouton.

Selon une variante de réalisation du dispositif conforme à l'invention, c'est la station de base (4) qui est alimentée en permanence pour scruter et déceler un actionnement d'un bouton ou d'un organe de commande.

Une reconnaissance au moins partielle du signal codé (2) par la station de base (4), consécutivement à la comparaison (C₁) permet alors d'alimenter électriquement les unités fonctionnelles (6, 7).

Le bus de données (5) permet par ailleurs à l'une (6) des unités fonctionnelles (6, 7) de contrôler l'autre unité fonctionnelle (7) et de n'activer cette autre unité fonctionnelle (7) qu'en cas de reconnaissance par la première unité fonctionnelle (6) du signal codé secondaire.

On peut ainsi réaliser une hiérarchisation des décodages effectués dans les unités fonctionnelles (6, 7).

Avantageusement, le dispositif comprend également une ou plusieurs antennes (4a) localisées sur le deux-roues pour émettre le signal d'activation (3) vers le badge (1).

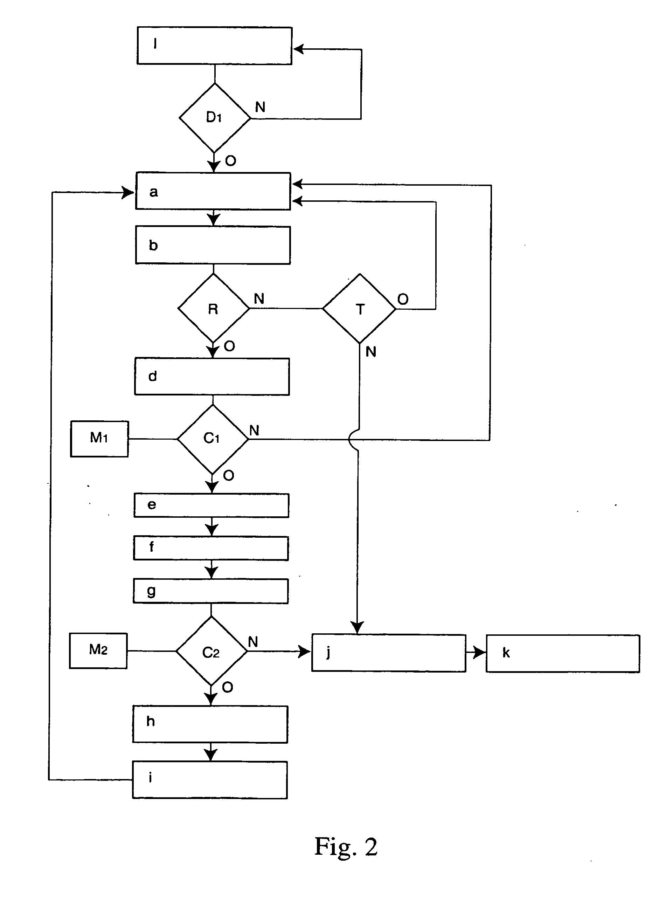

La figure 2 schématise les étapes d'un exemple de mise en oeuvre du procédé de commande pour l'utilisation d'un véhicule deux-roues motorisé.

Selon l'étape (l), le procédé consiste à scruter en permanence ou périodiquement l'actionnement d'au moins un organe de commande. Une telle scrutation permet de détecter l'actionnement d'un bouton ou d'un organe de commande ou par exemple de la manette d'actionnement des freins. Cette scrutation est effectuée par la station de base (4) ou le tableau de bord (8), comportant des moyens électroniques adéquats. Selon l'étape (a), en cas de détection (D1) d'un tel actionnement, le procédé permet d'émettre le signal d'activation (3) par l'intermédiaire d'une liaison sans fil (radiofréquence) avec l'actionnement de l'organe de commande. Ce signal d'activation (3) est émis par l'antenne (4a) de la station de base (4).

On utilise ensuite, selon l'étape (b), un badge (1) réceptionnant le signal d'activation (3) et émettant en réponse un signal codé (2) par l'intermédiaire d'une liaison sans fil (radiofréquence). Ceci s'avère possible dans la mesure où la badge (1) est localisé de façon suffisamment proche de la station de base (4).

En cas de réception (R) d'un signal codé (2) par la station de base (4), prévue à l'étape (c), on engage l'étape (d).

Lors de l'étape (d), on compare le signal codé (2) émis par le badge (1) à des données numériques spécifiques stockées dans une mémoire (M1) associée à la station de base (4). En cas de reconnaissance au moins partielle du signal codé (2) lors de cette comparaison (C₁), on transmet un signal codé secondaire vers au moins une unité fonctionnelle (6) ou (7). Ce signal codé secondaire présente le même codage que le signal codé (2) émis par le badge (1), remis en forme et complété par des informations codées propres à la station de base (4). La station de base (4) réorganise les données reçues par le badge (1) et ajoute des informations complémentaires liées au diagnostic de la station de base (4).

En cas de non-détection du signal codé (2), au cours de l'étape (c), le système et en l'occurrence les unités fonctionnelles (6, 7) restent dans leur état inactif initial. Ceci est par exemple le cas lorsque l'on part d'un état de repos des unités fonctionnelles (6, 7), et que la station de base (4) établit, suivant une requête (T), qu'il s'agit d'une tentative de démarrage.

On peut ainsi retourner à l'étape (a) pour émettre à nouveau le signal d'activation (3).

Si la station de base (4) établit en revanche que les unités fonctionnelles (6, 7) sont dans un état de fonctionnement nominal, il ne s'agit plus d'une tentative de démarrage. La non-détection ou réception du signal codé (2) par la station de base (4) entraîne alors une dégradation du fonctionnement des unités fonctionnelles (6, 7) selon l'étape (j) et, le cas échéant, un arrêt total selon l'étape (k).

La transmission de ce signal codé secondaire se fait par l'intermédiaire d'une liaison filaire constituant un bus de données (5), après l'activation d'au moins une unité fonctionnelle (6 ou 7), suivant l'étape (e).

On compare ensuite le signal codé secondaire à un signal codé stocké dans une mémoire externe ou interne (M₂) d'un microprocesseur pilotant l'unité fonctionnelle correspondante (6 ou 7). En fonction du résultat de la comparaison (C₂), on autorise ou on inhibe partiellement ou totalement le fonctionnement de cette unité fonctionnelle. Ainsi, en cas de non-reconnaissance du signal secondaire par l'unité fonctionnelle (6 ou 7), cette dernière ne peut mettre en oeuvre ses fonctions. L'utilisation correcte du deux-roues motorisé devient ainsi impossible. On passe ainsi d'un état de fonctionnement dégradé suivant l'étape (j) à un arrêt total, ou une coupure d'alimentation suivant l'étape (k).

En cas de reconnaissance, le fonctionnement normal ou nominal est autorisé suivant l'étape (h).

Le procédé de commande conforme à l'invention consiste également à émettre, périodiquement et / ou de façon évènementielle, le signal d'activation (3) sur requête d'au moins une unité fonctionnelle (6 ou 7) suivant l'étape (i). Ceci permet à au moins une unité fonctionnelle (6 ou 7) de vérifier, en cours d'utilisation du deux roues motorisé, que c'est bien la personne habilitée qui pilote ledit deux-roues, en l'occurrence la personne portant le badge (1) attribué au deux-roues motorisé en question.

Selon un exemple de mise en oeuvre du procédé conforme à l'invention, ce dernier consiste à transmettre des informations codées entre d'une part au moins un badge (1) et une station de base (4), et d'autre part entre la station de base (4) et la ou les unités fonctionnelles (6, 7). Ceci présente l'avantage non négligeable d'éviter toute transmission d'ordre ou d'information sous forme d'un signal électrique simple et facilement identifiable.

Le procédé consiste également à transmettre les informations à l'aide du signal codé secondaire entre les unités fonctionnelles (6) et (7). L'association d'unités fonctionnelles complémentaires (non représentées à la figure 1) peut également être envisagée sans sortir du cadre de la présente invention.

Le procédé consiste par exemple à décoder partiellement sur la station de base (4) le signal codé (2) provenant d'au moins un badge (1). Ce décodage, par exemple partiel, consiste par exemple à décoder quelques éléments du code correspondants par exemple à la marque du véhicule deux-roues motorisé ou à une autre information s'y rapportant. En cas de reconnaissance ou d'authentification du code ou d'une partie du code consécutivement à l'étape (d), le procédé permet d'activer ou d'alimenter électriquement les unités fonctionnelles (6) et (7), et le cas échéant, le tableau de bord (8) (étape (e)). On transmet ensuite le signal codé secondaire vers au moins une unité fonctionnelle (6 ou 7).

Le procédé suivant un exemple de mise en oeuvre consiste ensuite à décoder au moins partiellement au niveau de chaque unité fonctionnelle (6, 7), le signal codé secondaire provenant de la station de base (4). Le décodage au niveau de chaque unité fonctionnelle (6, 7) est de préférence complété par rapport au décodage de base effectué dans la station de base (4), en utilisant un algorithme de cryptage identique.

Cette dernière est par exemple capable de décoder une partie du signal codé (2) pour faire une identification partielle de celui-ci. Le décodage au niveau d'une unité fonctionnelle (6, 7) associée à un microprocesseur et une mémoire (M2), permet ensuite de faire une identification totale du signal codé secondaire.

En cas de reconnaissance par une unité fonctionnelle (6, 7) du signal codé secondaire, on autorise le fonctionnement de cette dernière ou on active une fonction attribuée à cette dernière.

L'une au moins des unités fonctionnelles (6) ou (7) permet, selon l'étape (i), d'émettre périodiquement ou de façon évènementielle, un signal d'activation (3) sous l'étape (a). Un tel contrôle par exemple cyclique est effectué soit en passant par la station de base (4), soit directement à l'initiative de la station de base (4). Ceci peut se produire lorsque l'une des deux unités fonctionnelles (6, 7) détecte un fonctionnement anormal, un brusque changement de régime ou d'autres états qu'elle aura appris à reconnaître. Si au cours du fonctionnement du deux-roues motorisé, un nouveau signal d'activation (3) est émis suivant l'étape (a), et si aucun signal codé (2) émis par le badge (1) n'est détecté, le procédé permet avec les étapes (j) et (k), de couper l'alimentation électrique de la ou des unités fonctionnelles (6, 7). Cette coupure se produit par exemple lors d'un éloignement trop important du badge (1), empêchant l'émission et/ou la réception du signal codé (2).

Le procédé consiste également à alimenter électriquement (ou activer) la ou les unités fonctionnelles (6, 7) en cas de reconnaissance au moins partielle du signal codé (2) par la station de base (4), selon l'étape (e).

Selon un autre exemple de mise en oeuvre du procédé conforme à l'invention, ce dernier consiste à initier une dégradation (j) du fonctionnement d'au moins une unité fonctionnelle (6, 7), en cas de non-reconnaissance par la station de base (4) du signal codé émis par un badge (1). Ceci permet d'interrompre le fonctionnement du véhicule deux-roues, en cas de subtilisation en cours d'utilisation à son propriétaire. L'arrêt total peut aussi être provoqué après une durée déterminée consécutivement à l'initiation d'une dégradation progressive du fonctionnement d'au moins une unité fonctionnelle (6 ou 7) selon l'étape (j).

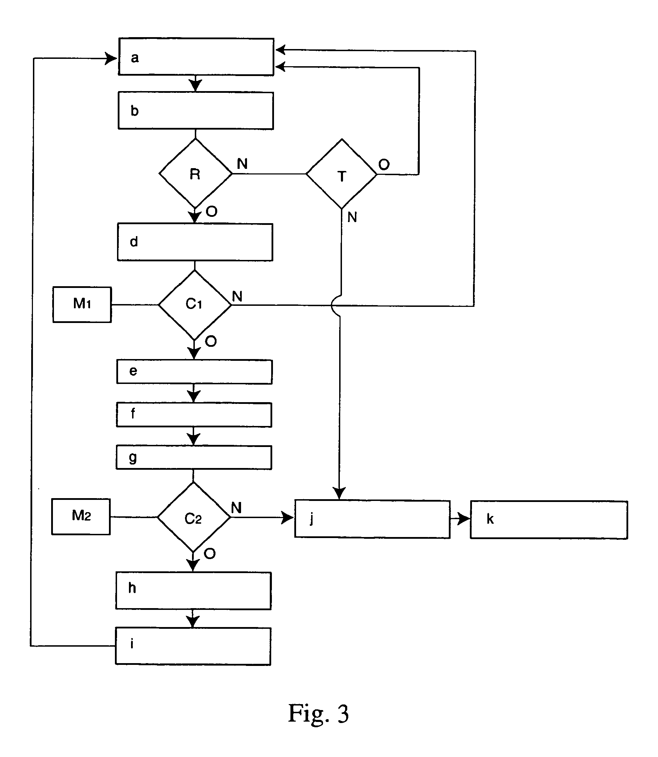

Selon l'exemple de mise en oeuvre schématisé à la figure 3, on émet de façon régulière ou périodique le signal d'activation (3) suivant l'étape (a), sans détection d'un éventuel actionnement d'un bouton ou d'un organe de commande.

Au cours du fonctionnement du deux-roues, sur requête d'une unité fonctionnelle (6 ou 7) ou de la station de base (4), on initie les étapes correspondant à une authentification du signal codé (2) et du signal codé secondaire. Cette requête peut être régulière et / ou évènementielle. Pour le reste, la mise en oeuvre du dispositif reste inchangée par rapport à celle illustrée par la figure 2.

Un avantage du procédé conforme à l'invention réside dans l'utilisation d'un codage ou cryptage à deux niveaux. Le premier niveau correspond au signal codé (2) utilisé pour une identification simplifiée du badge (1), et le second niveau correspond au signal codé complémentaire utilisé pour une identification complète du badge (1). Tant que l'identification simplifiée ou la reconnaissance du badge (1) n'est pas effective, les unités fonctionnelles (6, 7), et le cas échéant d'autres organes, ne sont pas activés ou mis en état de veille, via une alimentation électrique.

Ce n'est qu'en cas d'identification simplifiée du badge (1) par la station de base (4), que notamment les unités fonctionnelles (6, 7) sont alimentées électriquement en vue d'un fonctionnement avec un signal de commande correspondant au signal complémentaire décodé ou décrypté.

Ceci entraîne une économie d'énergie électrique appréciable, en particulier lors de longues périodes d'inutilisation du véhicule motorisé. La consommation d'énergie électrique est ainsi optimisée.

La présente invention trouve son application également dans le domaine d'autres véhicules motorisés, tels que les scooters de mer, de neige ou autres.

## Revendications

1. Procédé de commande pour l'utilisation d'un véhicule motorisé du type deux-roues consistant :
(a) à émettre à partir d'une station de base (4) un signal d'activation (3), par l'intermédiaire d'une liaison sans fil,
(b) à utiliser un badge (1) réceptionnant le signal d'activation (3) et émettant en réponse un signal codé (2), par l'intermédiaire d'une liaison sans fil,
(c) à réceptionner le signal codé (2) par la station de base (4),
(d) à comparer dans la station de base (4) le signal codé (2) à un signal codé et stocké dans une mémoire (M₁),
(e) à activer au moins une unité fonctionnelle (6 ou 7) en cas de reconnaissance au moins partielle du signal codé (2),
(f) à transmettre un signal codé secondaire correspondant au signal codé (2) complété et/ou remis en forme par la station de base (4), vers au moins une unité fonctionnelle (6 ou 7),
(g) à comparer le signal codé secondaire à des données nécessaires à la comparaison et à la reconnaissance, stockées dans une mémoire externe ou interne (M₂) d'un microprocesseur pilotant l'unité fonctionnelle (6 ou 7) correspondante,
(h) à déverrouiller l'unité fonctionnelle (6 ou 7) correspondante, en cas de reconnaissance du signal codé secondaire par l'unité fonctionnelle correspondante (6 ou 7),
(i) et émettre périodiquement et / ou de façon évènementielle le signal d'activation sous (a) sur requête d'au moins une unité fonctionnelle (6, 7) en passant par la station de base (4) ou directement à l'initiative de la station de base (4).

2. Procédé selon la revendication 1, **caractérisé en ce qu'**il consiste à inhiber partiellement selon une étape (j) et / ou totalement selon une étape (k), le fonctionnement de l'unité fonctionnelle (6 ou 7) correspondante, au bout d'une durée prédéterminée.

3. Procédé selon la revendication 1 ou 2, **caractérisé en ce qu'**il consiste au préalable à l'étape (a), à scruter en permanence ou périodiquement l'actionnement d'au moins un organe de commande selon l'étape (I), et de mettre en oeuvre l'étape (a) après une détection d'actionnement.

4. Procédé selon la revendication 1 ou 2, **caractérisé en ce qu'**il consiste à mettre en oeuvre l'étape (a) de façon automatique et périodique.

5. Procédé de commande selon l'une quelconque des revendications 1 à 4 consistant à transmettre des informations à l'aide d'informations codées entre d'une part au moins un badge (1) et une station de base (4), et d'autre part entre la station de base (4) et la ou les unités fonctionnelles (6, 7).

6. Procédé de commande selon l'une quelconque des revendications 1 à 5 consistant à transmettre les informations à l'aide d'un signal codé entre des unités fonctionnelles (6, 7).

7. Procédé de commande selon l'une quelconque des revendications 1 à 6 consistant à décoder partiellement sur la station de base (4) le signal codé (2) provenant d'au moins un badge (1).

8. Procédé de commande selon l'une quelconque des revendications 1 à 7 consistant à décoder au moins partiellement au niveau de chaque unité fonctionnelle (6 ou 7), le signal codé secondaire provenant de la station de base (4).

9. Procédé de commande selon l'une quelconque des revendications 1 à 8 consistant à décoder complètement sur au moins une unité fonctionnelle (6) ou (7), le signal codé secondaire provenant de la station de base (4).

10. Procédé de commande selon l'une quelconque des revendications 1 à 9 consistant à alimenter électriquement la ou les unités fonctionnelles (6, 7) lors de la première reconnaissance au moins partielle par la station de base (4) du signal codé (2) émis par un badge (1), consécutivement à une première comparaison (C1).

11. Procédé de commande selon l'une quelconque des revendications 1 à 10 consistant à interdire le fonctionnement d'au moins une unité fonctionnelle (6, 7) en cas de non-reconnaissance soit par la station de base (4) du signal codé (2) émis par un badge (1), soit par l'unité fonctionnelle correspondante (6, 7) du signal codé secondaire provenant de la station de base (4).

12. Procédé de commande selon l'une quelconque des revendications 1 à 11 consistant à mettre en oeuvre un décodage d'un niveau différent dans la station de base (4) et dans la ou les unités fonctionnelles (6, 7).

13. Procédé selon l'une quelconque des revendications 1 à 12, **caractérisé en ce qu'**il consiste à dégrader (i) le fonctionnement de la ou des unités fonctionnelles (6, 7), en cas de non reconnaissance du signal codé secondaire émis par la station de base (4), consécutivement à une seconde comparaison (C2).

14. Procédé selon la revendication 11, consistant à couper (k) l'alimentation électrique de la ou des unités fonctionnelles (6, 7), consécutivement à l'étape (i) ou (j), après un intervalle de temps déterminé.

15. Dispositif de mise en oeuvre du procédé selon l'une quelconque des revendications 1 à 14 comportant :
- au moins un badge (1) incorporant une pile et susceptible d'émettre un signal codé (2) en réponse à un signal d'activation (3),
- une station de base (4) émettant le signal d'activation (3) et alimentée électriquement périodiquement ou en permanence par une source d'énergie,
- au moins une antenne d'émission (4a) connectée électriquement à la station de base (4), propageant le signal d'activation (3) dans l'air,
- des moyens de décodage au moins partiel du signal codé (2), incorporés dans la station de base (4),
**caractérisé par**
- un bus de données (5) reliant la station de base (4) à au moins une unité fonctionnelle (6 ou 7) de manière à transmettre un signal codé secondaire à la ou aux unités fonctionnelles (6, 7),
- et des moyens de décodage complémentaires, intégrés dans la ou dans chacune des unités fonctionnelles (6, 7).

16. Dispositif selon la revendication 15, **caractérisé en ce qu'**il comprend au moins un organe de commande ou bouton destiné à être actionné par l'utilisateur pour l'émission du signal d'activation (3).

17. Dispositif selon la revendication 15 ou 16, **caractérisé en ce qu'**il comporte un microprocesseur associé à chaque unité fonctionnelle (6) ou (7), le ou les microprocesseurs étant reliés entre eux via le bus de données (5) et réalisant au moins en partie les moyens de décodage complémentaires.

18. Dispositif selon la revendication 17, **caractérisé en ce qu'**au moins un microprocesseur est associé à une mémoire externe ou interne (M₂) stockant les données nécessaires à la reconnaissance du signal codé secondaire.

19. Dispositif selon la revendication 18, **caractérisé en ce qu'**il comporte deux organes de commande, l'un servant au moins au démarrage du véhicule deux-roues motorisé, l'autre servant au déverrouillage d'un organe du type capot ou trappe d'accès.

20. Dispositif selon l'une quelconque des revendications 15 à 19, **caractérisé en ce qu'**il comprend, en cas de défaillance du badge, un connecteur destiné à recevoir un badge (1) et à alimenter électriquement ledit badge (1).

21. Dispositif selon l'une quelconque des revendications 15 à 19, **caractérisé en ce qu'**il comprend, en cas de défaillance du badge, une liaison transpondeur utilisée avec une bobine ré-alimentant le badge (1) par liaison inductive de proximité.

## Claims

1. Control process for the use of a motor vehicle of two-wheeled type consisting:
(a) of transmitting from a base station (4) an activation signal (3), via a wireless connection,
(b) of using a badge (1) receiving the activation signal (3) and in response transmitting a coded signal (2), via a wireless connection,
(c) of receiving the coded signal (2) through the base station (4),
(d) of comparing in the base station (4) the coded signal (2) with a coded signal stored in a memory (M₁),
(e) of activating at least one functional unit (6 or 7) in case of at least partial recognition of the coded signal (2),
(f) of transmitting a secondary coded signal corresponding to the coded signal (2) completed and/or reshaped by the base station (4), to at least one functional unit (6 or 7),
(g) of comparing the secondary coded signal with data necessary for comparison and recognition, stored in an external or internal memory (M₂) of a microprocessor controlling the corresponding functional unit (6 or 7),
(h) of unlocking the corresponding functional unit (6 or 7), in case of recognition of the secondary coded signal by the corresponding functional unit (6 or 7).
(i) and transmitting periodically and/or in event-related manner the activation signal under (a) at the request of at least one functional unit (6, 7) through the base station (4) or directly on the initiative of the base station (4).

2. Process as described in claim 1, **characterised by** the fact that it consists of preventing partially in accordance with a step (j) and/or totally in accordance with a step (k) the functioning of the corresponding functional unit (6 or 7), at the end of a predetermined period.

3. Process as described in claim 1 or 2, **characterised by** the fact that it consists prior to step (a) of continuously or periodically scanning for the actuation of at least one control organ in accordance with step (I), and implementing step (a) after detection of actuation.

4. Process as described in claim 1 or 2, **characterised by** the fact that it consists of implementing step (a) automatically and periodically.

5. Control process as described in any one of claims 1 to 4, consisting of transmitting data using coded data between on the one hand at least one badge (1) and a base station (4), and on the other between the base station (4) and the functional unit or units (6, 7).

6. Control process as described in any one of claims 1 to 5, consisting of transmitting data using a coded signal between functional units (6, 7).

7. Control process as described in any one of claims 1 to 6 consisting of partially decoding at the base station (4) the coded signal (2) from at least one badge (1).

8. Control process as described in any one of claims 1 to 7 consisting of at least partially decoding at each functional unit (6 or 7), the secondary coded signal from the base station (4).

9. Control process as described in any one of claims 1 to 8 consisting of completely decoding at at least one functional unit (6) or (7) the secondary coded signal from the base station (4).

10. Control process as described in any one of claims 1 to 9 consisting of electrically supplying the functional unit or functional units (6, 7) on the first at least partial recognition by the base station (4) of the coded signal (2) transmitted by a badge (1), following a first comparison (C1).

11. Control process as described in any one of claims 1 to 10 consisting of preventing the functioning of at least one functional unit (6, 7) in case of non-recognition either by the base station (4) of the coded signal (2) transmitted by a badge (1), or by the corresponding functional unit (6, 7) of the secondary coded signal from the base station (4).

12. Control process as described in any one of claims 1 to 11 consisting of implementing decoding of a different level in the base station (4) and in the functional unit or functional units (6, 7).

13. Process as described in any one of claims 1 to 12, **characterised by** the fact that it consists of degrading (i) the functioning of the functional unit or functional units (6, 7) in case of non-recognition of the secondary coded signal transmitted by the base station (4), following a second comparison (C2).

14. Process as described in claim 11, consisting of cutting (k) the electrical supply of the functional unit or functional units (6, 7) following step (i) or (j), after a determined time interval.

15. Device for implementing the process as described in any one of claims 1 to 14 including:
- at least one badge (1) incorporating a battery and able to transmit a coded signal (2) in response to an activation signal (3),
- a base station (4) transmitting the activation signal (3) and electrically supplied periodically or continuously by an energy source,
- at least one transmission antenna (4a) electrically connected to the base station (4), propagating the activation signal (3) in the air,
- means for at least partial decoding of the coded signal (2), incorporated in the base station (4),
**characterised by**
- a data bus (5) connecting the base station (4) to at least one functional unit (6 or 7) so as to transmit a secondary coded signal to the functional unit or functional units (6, 7),
- and complementary decoding means, integrated in the or in each of the functional units (6, 7).

16. Device as described in claim 15, **characterised by** the fact that it comprises at least one control organ or button intended to be actuated by the user for transmission of the activation signal (3).

17. Device as described in claim 15 or 16, **characterised by** the fact that it includes a microprocessor associated with each functional unit (6) or (7), the microprocessor or microprocessors being connected to each other via the data bus (5) and at least partially forming the complementary decoding means.

18. Device as described in claim 17, **characterised by** the fact that at least one microprocessor is associated with an external or internal memory (M₂) storing the data necessary for recognition of the secondary coded signal.

19. Device as described in claim 18, **characterised by** the fact that it includes two control organs, one used at least for starting the two-wheeled motor vehicle, the other used for unlocking an organ of bonnet or access flap type.

20. Device as described in any one of claims 15 to 19, **characterised by** the fact that it includes, in case of failure of the badge, an electrical connector intended to receive a badge (1) and to electrically supply the said badge (1).

21. Device as described in any one of claims 15 to 19, **characterised by** the fact that it includes, in case of failure of the badge, a transponder connection used with a coil re-charging the badge (1) by inductive proximity connection.

## Patentansprüche

1. Steuerverfahren für die Verwendung eines Zweirad-Motorfahrzeugs, das darin besteht, dass
(a) von einer Basisstation (4) aus über eine drahtlose Verbindung ein Aktivierungssignal (3)gesendet wird,
(b) eine Marke (1) verwendet wird, die das Aktivierungssignal (3) empfängt und als Antwort über eine drahtlose Verbindung ein kodiertes Signal (2) sendet,
(c) das kodierte Signal (2) von der Basisstation (4) empfangen wird,
(d) in der Basisstation (4) das kodierte Signal (2) mit einem kodierten und in einem Speicher (M₁) gespeicherten Signal verglichen wird,
(e) im Fall des mindestens partiellen Erkennens des kodierten Signals (2) mindestens eine Funktionseinheit (6 oder 7) aktiviert wird,
(f) ein kodiertes Sekundärsignal, das dem durch die Basisstation (4) ergänzten oder in Form gebrachten kodierten Signal (2) entspricht, zu mindestens einer Funktionseinheit (6 oder 7) übertragen wird,
(g) das kodierte Sekundärsignal mit für den Vergleich und das Erkennen erforderlichen Daten verglichen wird, die in einem externen oder internen Speicher (M₂) eines Mikroprozessors gespeichert sind, der die entsprechende Funktionseinheit (6 oder 7) steuert,
(h) die entsprechende Funktionseinheit (6 oder 7) im Fall des Erkennens des kodierten Sekundärsignals durch die entsprechende Funktionseinheit (6 oder 7) entriegelt wird,
(i) periodisch und/oder gelegentlich das Aktivierungssignal unter (a) auf Anforderung mindestens einer Funktionseinheit (6, 7) über die Basisstation (4) oder direkt auf die Initiative der Basisstation (4) hin gesendet wird.

2. Verfahren nach Anspruch 1, **dadurch gekennzeichnet, dass** es darin besteht, dass der Betrieb der entsprechenden Funktionseinheit (6 oder 7) nach einer vorbestimmten Dauer gemäß einem Schritt (j) teilweise und/oder gemäß einem Schritt (k) vollständig gehemmt wird.

3. Verfahren nach Anspruch 1 oder 2, **dadurch gekennzeichnet, dass** es darin besteht, dass vor dem Schritt (a) ständig oder periodisch die Betätigung mindestens eines Steuerorgans gemäß dem Schritt (I) abgetastet wird und nach einer Betätigungserfassung der Schritt (a) durchgeführt wird.

4. Verfahren nach Anspruch 1 oder 2, **dadurch gekennzeichnet, dass** es darin besteht, dass der Schritt (a) automatisch und periodisch durchgeführt wird.

5. Steuerverfahren nach einem der Ansprüche 1 bis 4, das darin besteht, dass zwischen einerseits mindestens einer Marke (1) und einer Basisstation (4) und andererseits zwischen der Basisstation (4) und der oder den Funktionseinheiten (6, 7) Informationen mit Hilfe von kodierten Informationen übertragen werden.

6. Steuerverfahren nach einem der Ansprüche 1 bis 5, das darin besteht, dass die Informationen mit Hilfe eines kodierten Signals zwischen Funktionseinheiten (6, 7) übertragen werden.

7. Steuervorrichtung nach einem der Ansprüche 1 bis 6, das darin besteht, dass das von mindestens einer Marke (1) kommende kodierte Signal (2) auf der Basisstation (4) partiell dekodiert wird.

8. Steuerverfahren nach einem der Ansprüche 1 bis 7, das darin besteht, dass das von der Basisstation (4) kommende kodierte Sekundärsignal auf Höhe jeder Funktionseinheit (6 oder 7) mindestens partiell dekodiert wird.

9. Steuerverfahren nach einem der Ansprüche 1 bis 8, das darin besteht, das das von der Basisstation (4) kommende kodierte Sekundärsignal auf mindestens einer Funktionseinheit (6) oder (7) vollständig dekodiert wird.

10. Steuerverfahren nach einem der Ansprüche 1 bis 9, das darin besteht, dass die Funktionseinheit oder -einheiten (6, 7) bei dem ersten mindestens partiellen Erkennen des von einer Marke (1) gesendeten kodierten Signals (2) durch die Basisstation (4) nach einem ersten Vergleich (C₁) elektrisch versorgt werden.

11. Steuerverfahren nach einem der Ansprüche 1 bis 10, das darin besteht, dass im Fall des Nicht-Erkennens des von einer Marke (1) gesendeten kodierten Signals (2) durch die Basisstation (4) oder des von der Basisstation (4) kommenden kodierten Sekundärsignals durch die entsprechende Funktionseinheit (6, 7) der Betrieb mindestens einer Funktionseinheit (6, 7) blockiert wird.

12. Steuerverfahren nach einem der Ansprüche 1 bis 11, das darin besteht, dass in der Basisstation (4) und in der oder den Funktionseinheiten (6, 7) eine Dekodierung von einer anderen Höhe vorgenommen wird.

13. Verfahren nach einem der Ansprüche 1 bis 12, das darin besteht, dass der Betrieb der Funktionseinheit oder -einheiten (6, 7) im Fall des Nicht-Erkennens des von der Basisstation (4) gesendeten kodierten Sekundärsignals nach einem zweiten Vergleich (C₂) beeinträchtigt wird (i).

14. Verfahren nach Anspruch 11, das darin besteht, dass die elektrische Versorgung der Funktionseinheit oder -einheiten (6, 7) nach dem Schritt (i) oder (j) nach einem bestimmten Zeitintervall unterbrochen wird (k).

15. Vorrichtung zur Durchführung des Verfahrens nach einem der Ansprüche 1 bis 14, umfassend:
- mindestens eine Marke (1), in die eine Batterie eingegliedert ist und die als Antwort auf ein Aktivierungssignal (3) ein kodiertes Signal (2) senden kann,
- eine Basisstation (4), die das Aktivierungssignal (3) sendet und periodisch oder ständig durch eine Energiequelle elektrisch versorgt wird,
- mindestens eine Sendeantenne (4a), die mit der Basisstation (4) elektrisch verbunden ist und das Aktivierungssignal (3) in der Luft verbreitet,
- Mittel zur mindestens partiellen Dekodierung des kodierten Signals (2), die in die Basisstation eingegliedert sind,
**gekennzeichnet durch**
- einen Datenbus (5), der die Basisstation (4) mit mindestens einer Funktionseinheit (6 oder 7) so verbindet, dass zu der oder den Funktionseinheiten (6, 7) ein kodiertes Sekundärsignal übertragen wird,
- und ergänzende Dekodierungsmittel, die in die Funktionseinheit oder in jede der Funktionseinheiten (6, 7) integriert sind.

16. Vorrichtung nach Anspruch 15, **dadurch gekennzeichnet, dass** sie mindestens ein Betätigungsorgan oder Knopf umfasst, das bzw. der dazu bestimmt ist, durch den Benutzer für die Sendung des Aktivierungssignals (3) betätigt zu werden.

17. Vorrichtung nach Anspruch 15 oder 16, **dadurch gekennzeichnet, dass** sie einen Mikroprozessor umfasst, der jeder Funktionseinheit (6) oder (7) zugeordnet ist, wobei der oder die Mikroprozessoren über den Datenbus (5) untereinander verbunden sind und mindestens zum Teil die ergänzenden Dekodierungsmittel bilden.

18. Vorrichtung nach Anspruch 17, **dadurch gekennzeichnet, dass** mindestens ein Mikroprozessor einem externen oder internen Speicher (M₂) zugeordnet ist, der die zum Erkennen des kodierten Sekundärsignals erforderlichen Daten speichert.

19. Vorrichtung nach Anspruch 18, **dadurch gekennzeichnet, dass** sie zwei Betätigungsorgane umfasst, deren eines mindestens zum Anlassen des Zweirad-Motorfahrzeugs dient, wobei das andere zur Entriegelung eines Organs vom Typ Haube oder Zugangsklappe dient.

20. Vorrichtung nach einem der Ansprüche 15 bis 19, **dadurch gekennzeichnet, dass** sie im Fall eines Versagens der Marke einen Verbinder umfasst, der dazu bestimmt ist, eine Marke (1) aufzunehmen und diese Marke (1) elektrisch zu versorgen.

21. Vorrichtung nach einem der Ansprüche 15 bis 19, **dadurch gekennzeichnet, dass** sie im Fall des Versagens der Marke eine Transponderverbindung umfasst, die mit einer Spule verwendet wird, die die Marke durch induktive Nahverbindung (1) wiederversorgt.
